# EUROPEAN PATENT APPLICATION

(11) **EP 1 369 866 A2**
(43) Date of publication of application: **10.12.2003**
(21) Application number: 03012715.3
(22) Date of filing: 04.06.2003
(51) Int. Cl.: G11B 19/00

(54) **Operation explanation apparatus, operation explanation method and data recording medium on which an operation explanation program is recorded and an operation explanation data signal**

(30) Priority: 07.06.2002 JP 2002166909
(71) Applicant: Pioneer Corporation, Tokyo-to (JP)
(72) Inventor: Kajita, Akihito, Tokorozawa-shi, Saitama-ken (JP)
(74) Representative: Grünecker, Kinkeldey, Stockmair & Schwanhäusser Anwaltssozietät

(57) **Abstract**

Operation Explanation Apparatus, Operation Explanation Method and Data-Recording Medium on Which An Operation Explanation Program is Recorded

This invention provides an operation explanation apparatus (100) that makes it possible to sufficiently explain the operation of necessary control buttons (108) using easy operations.

The operation explanation apparatus (100) of this invention comprising: a mounting unit (102) in which a recording medium (DK) recorded with pairs of explanation data for explaining the operation of one or a plurality of control buttons (108), and specification data for specifying that explanation data is mounted; memory (104) that stores correspondence data that indicates the correspondence between a pair of operation-unit ID data (Icn) for identifying a control button (108), and specification data.

## Description

### BACKGROUND OF THE INVENTION

### 1. Field of the Invention

This invention relates to an operation explanation apparatus, operation explanation method and a data-recording medium on which an operation explanation program is recorded, which provide an explanation of how to operate various apparatuses.

### 2. Description of the Related Art

Up until now, a user has referred to an 'Operation Manual' that was supplied with an apparatus for the method of how to operate the apparatus. Methods have also been used in which a memory was installed in the apparatus in which an explanation of the operation was stored as an audio guide that explained the operation using audio.

There have also been methods such as providing handling instructions by audio or images that are recorded on a recording medium such as a CD-ROM or videotape.

However, since the explanation in the 'Operation Manual' that was supplied with the apparatus was in written text, there was a problem in that the explanation was difficult to understand.

Moreover, in the case of storing the explanation of operation in a memory in the apparatus, a large amount of memory space was required when there were a lot of operations or a large number of control buttons, so an inconvenience existed in that the cost of the apparatus became high.

Furthermore, the method of reading the operation explanation from the memory of this apparatus was given in an 'Operation Manual' or the like, and thus as a result the explanation was still in written text.

In the method of storing the operation explanation on a recording medium such as a CD-ROM or videotape, in order for the user to find the location where the operation explanation relating to the user's question was stored, the user had to play back and go through the entire recording medium, which took a very long time.

### SUMMARY OF THE INVENTION

It is therefore an object of the present invention to provide an operation explanation apparatus, operation explanation method, and a data-recording medium on which an operation explanation program is recorded that make it possible to sufficiently explain the operation of the apparatus in easy steps.
(1) The above object of the present invention can be achieved by a operation explanation apparatus provided with: a mounting device such as a mounting apparatus in which a recording medium, containing pairs of explanation data for explaining the operation of the operation unit such as one or a plurality of buttons and specification data for specifying the explanation data, is mounted; a storage device such as a memory that stores correspondence data that indicates the 5 correspondence between the operation-unit ID data, which identifies the operation unit, and the specification data; a generation device such as a generation unit that determines whether or not an operation unit was operated and generates operation-unit ID data that identifies that operation unit; a detection device that comprises a control unit that searches the specification data corresponding to the generated operation-unit ID data based on the stored correspondence data; and an output device such as a display unit that detects and outputs explanation data from the recording medium that corresponds to the searched specification data.

According to the present invention, since the user specifies the operation unit to be explained, and the computer functions to play and output from the recording medium only the explanation data corresponding to the operation of that specified operation unit, so it is possible to identify just the explanation corresponding to the operation unit to be explained, and it is possible to perform an explanation of the desired operation unit according to operations by the user.
(2) In one aspect of the present invention, the operation explanation apparatus is wherein the explanation data are audio explanation data that use audio to explain the operation and the output device detects the audio explanation data from the recording medium corresponding to the searched specification data, and outputs the audio explanation data.

According to the present invention, since the explanation data are image explanation data that use images to explain the operation, it is possible to easily perform the necessary explanation in an easy-to-understand way, and operation can be performed easily even by the hearing impaired.
(3) In another aspect of the present invention, the operation explanation apparatus is wherein the explanation data are image explanation data that use images to explain the operation; the output device detects the image explanation data from the recording medium corresponding to the searched specification data, and displays the image explanation data.

According to the present invention, since the explanation data are image explanation data that use images to explain the operation, it is possible to easily perform the necessary explanation in an easy-to-understand way, and operation can be performed easily even by the hearing impaired.
(4) The above object of the present invention can be achieved by a recording medium provided with an explanation-data recording area in which an explanation data and a specification data are recorded for at least the number of an operation units wherein, the recording medium is mounted in an operation explanation apparatus comprising: a mounting device such as a mounting apparatus in which a recording medium, containing pairs of explanation data for explaining the operation of the operation unit such as one or a plurality of buttons and specification data for specifying the explanation data, is mounted; a storage device such as a memory that stores correspondence data that indicates the correspondence between the operation-unit ID data, which identifies the operation unit, and the specification data; a generation device such as a generation unit that determines whether or not an operation unit was operated and generates operation-unit ID data that identifies that operation unit; a detection device that comprises a control unit that searches the specification data corresponding to the generated operation-unit ID data based on the stored correspondence data; and an output device such as a display unit that detects and outputs explanation data from the recording medium that corresponds to the searched specification data.

According to the present invention, since the pairs of explanation data and specification data for specifying the explanation data are recorded for just the number of operation units, by searching the specification data and playing and outputting just the explanation data corresponding to the operation unit for which an explanation is required, it is possible to identify just the explanation corresponding to the operation unit for which an explanation is desired and to perform the explanation of the necessary operation unit according to operations by the user.
(5) In further aspect of the present invention, the operation explanation apparatus is wherein the recording medium has a specification area for specifying that the explanation data and the specification data are recorded; the operation explanation apparatus comprises: a judgment device that reads the specification area when the recording medium is mounted in the mounting device and determines whether or not the recording medium is a recording medium recorded with the explanation data and the specification data.

According to the present invention, since the mounted recording medium contains data for specifying whether or not the recording medium is a recording medium for operation explanation, and there is a judgment device that determines whether or not the mounted recording medium is a recording medium for operation explanation, so it is possible to automatically and efficiently determine whether or not the recording medium is for operation explanation without making changes to the normal play operation.
(6) In further aspect of the present invention, the operation explanation apparatus is wherein an end-operation unit that is operated when ending the operation explanation, and a stop device for stopping output of the explanation data that are being output when the end-operation device is operated.

According to the present invention, since there is an end-operation unit, such as a control button for removing the recording medium from the mounting unit and ending the operation explanation process, or a stop button the stops play of the medium, so it is possible for the user to remove the recording medium and end the operation explanation whenever it is desired.
(7) In further aspect of the present invention, the operation explanation apparatus is wherein a setting device for setting the output level of the output device to a preset output level or greater when starting output of the explanation data.

According to the present invention, it becomes possible for the user to more easily perform the operation explanation process, and the control of the output levels by the user is simplified.
(8) The above object of the present invention can be achieved by a operation explanation method provided with: a generation process of determining whether or not an operation unit, such as one or a plurality of control buttons, has been operated and generating operation-unit ID data for identifying the operation units that have been operated; a searching process that through a control unit or the like, searches specification data that correspond to the generated operation-unit ID data based on correspondence data that are stored beforehand in a memory or the like and that indicate the correspondence between the operation-unit ID data that correspond to the operation units, and specification data for specifying explanation data for explaining the operation of the operation units; and an output process of detecting explanation data for the operation units corresponding to the specification data searched in the search process from a recording medium on which the explanation data and specification data for specifying the explanation data are stored, and outputting that data from a speaker or display unit.

According to the present invention, since the user specifies the operation unit to be explained, and only the explanation data corresponding to the operation of that specified operation unit is played and output from the recording medium, so it is possible to identify just the explanation corresponding to the operation unit to be explained, and it is possible to perform an explanation of the desired operation unit according to operations by the user.
(9) In one aspect of the present invention, the operation explanation method is wherein the explanation data are audio explanation data that use audio to explain the operation; the output process detects the audio explanation data corresponding to the searched specification data from the recording medium, and outputs the audio explanation data.

According to the present invention, since the explanation data are audio explanation data that use audio for explaining the operation, it is possible to easily perform the necessary explanation, and operation can be performed easily, even by the seeing impaired.
(10) In another aspect of the present invention, the operation explanation method is wherein the explanation data are image explanation data that use images to explain the operation; the output process detects the image explanation data corresponding to the searched specification data from the recording medium, and displays the image explanation data.

According to the present invention, since the explanation data are image explanation data that use images to explain the operation, it is possible to easily perform the necessary explanation in an easy-to-understand way, and operation can be performed easily, even by the hearing impaired.
(11) The above object of the present invention can be achieved by a data-recording medium provided with: which is contained in a operation explanation apparatus that explains the operations that are executed by the operation units, to function as: a generation device such as a generation unit that determines whether or not the operation unit to be explained, such as one or a plurality of control buttons, has been operated, and generates operation-unit ID data for identifying the operation units that have been operated; a searching device that through a control unit or the like searches specification data that correspond to the generated operation-unit ID data based on correspondence data that are stored beforehand and that indicate the correspondence between the operation-unit ID data that correspond to the operation units, and specification data for specifying explanation data for explaining the operation of the operation units; and an output device that detects explanation data for the operation units corresponding to the specification data searched in the search process from a recording medium on which the explanation data and specification data for specifying the explanation data are stored, and outputs that data.

According to the present invention, since the user specifies the operation unit to be explained, and the computer functions to play and output from the recording medium only the explanation data corresponding to the operation of that specified operation unit, so it is possible to identify just the explanation corresponding to the operation unit to be explained, and it is possible to perform an explanation of the desired operation unit according to operations by the user.
(12) In one aspect of the present invention, the data-recording medium is wherein the explanation data are audio explanation data for explaining the operation using an audio, and where the program makes the computer, which functions as the output device, function such that it detects audio explanation data corresponding to the specification data searched from a recording medium and outputs that data.

According to the present invention, since the explanation data are audio explanation data that explain operations using audio, it is possible to easily perform the necessary explanation, and operation can be performed easily even by the seeing impaired.
(13) In another aspect of the present invention, the data-recording medium is wherein the explanation data are image explanation data for explaining the operation using video, and where the program makes the computer, which functions as the output device, function such that it detects image explanation data corresponding to the specification data searched from a recording medium and displays that data.

According to the present invention, the explanation data are image explanation data that explain operations using images, it is possible to perform the necessary explanations easily and in an easy-to-understand way, and operation can be performed easily even by the hearing impaired.

### BRIEF DESCRIPTION OF THE DRAWINGS

FIG. 1 is a block diagram showing the basic construction of an embodiment of the invention.
FIG. 2 is a drawing explaining the disk-correspondence data.
FIG. 3 is a drawing explaining the memory-correspondence data.
FIG. 4 is a flowchart showing the entire operation of an embodiment of the invention.
FIG. 5 is a flowchart of the operation explanation operation.

### DESCRIPTION OF THE PREFERRED EMBODIMENTS

The preferred embodiments of the invention will be explained based on the drawings.

In the embodiments to be explained below, the invention is applied to a player.

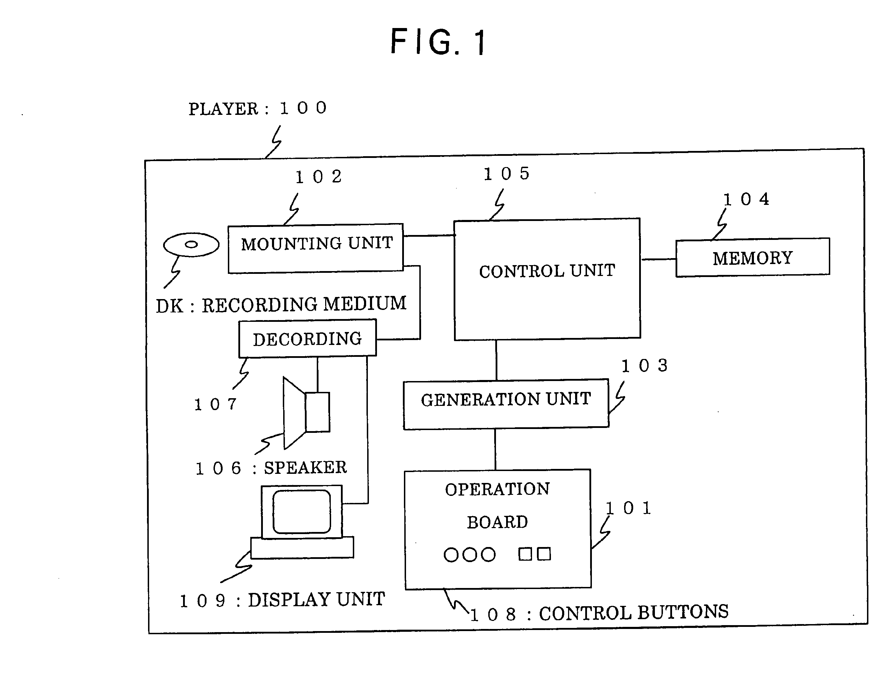

FIG. 1 is a block diagram showing the basic construction of an 5 embodiment of the invention.

The player comprises: an operation board 101, mounting unit 102, generation unit 103, memory 104, control unit 105, speaker 106, decoding unit 107 and display unit 109.

The operation board 101 normally comprises a plurality of control buttons 108 such as a stop button, play button and volume button for operating the player 100.

The generation- unit 103 determines which control button 108 was operated when one of the control buttons has been operated, and generates operation-unit ID data Icn for identifying the operated control button 108.

The mounting unit 102 is for mounting and operating a recording medium DK such as an optical disk.

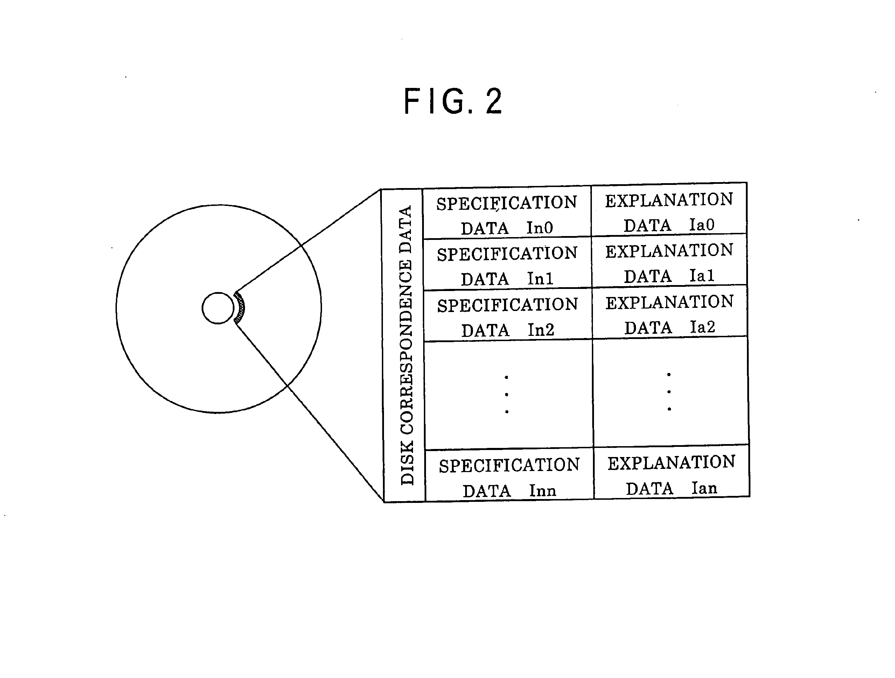

The recording medium DK normally has music or the like recorded on it, however, as shown in FIG. 2, the recording medium DK of this invention is recorded with only explanation data Ian as disk correspondence data for each control button 108, and specification data Inn for specifying the explanation data Ian for just the number of control buttons 108.

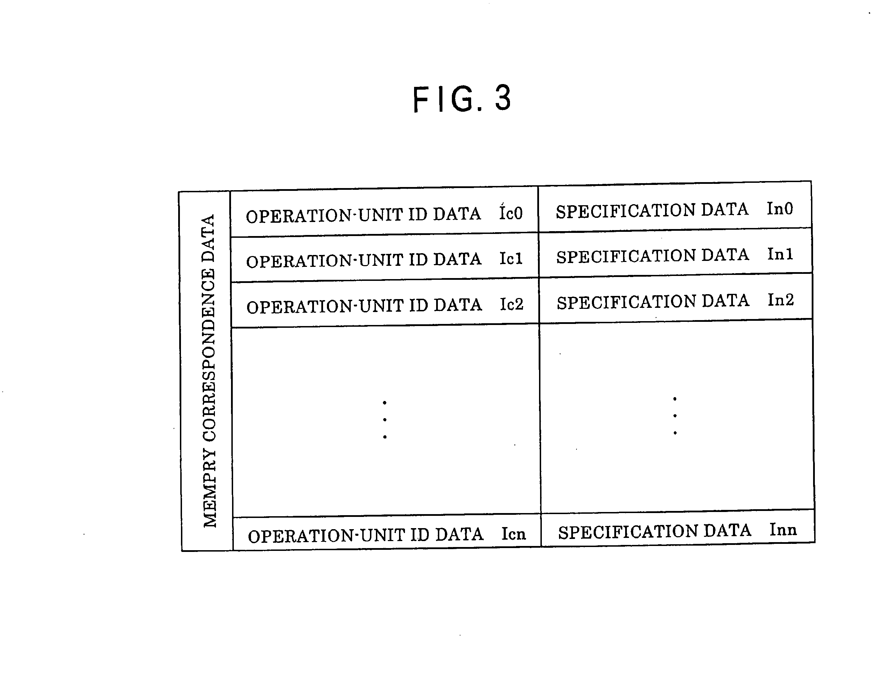

As shown in FIG. 3, memory-correspondence data, which indicate the correspondence between operation-unit ID data Icn and specification data Inn recorded on the recording medium DK, are stored beforehand in the memory 104.

Based on the memory-correspondence data stored in the memory 104, the control unit 105 searches for specification data Inn that corresponds to the generated operation-unit ID data Icn, then detects from the recording medium DK explanation data Ian that correspond to the specification data Inn and sends the data to the decoding unit 107.

The decoding unit 107 decodes the explanation data Ian that were detected from the recording medium DK, then sends the data to the speaker 106 and the speaker 106 outputs that explanation data Ian.

On the other hand, in the case of a recording medium DK recorded with music, the normal play operation is performed. The control unit 105 detects the song that corresponds to the selection operation executed from the operation board 101, and sends the data to the decoding unit 107, and after the decoding unit 107 decodes the song data, the song is output from the speaker 106. The same operation is performed for a recording medium DK that is recorded with normal images, and the images are output by the display unit 109.

Next, the operation of this invention will be explained.

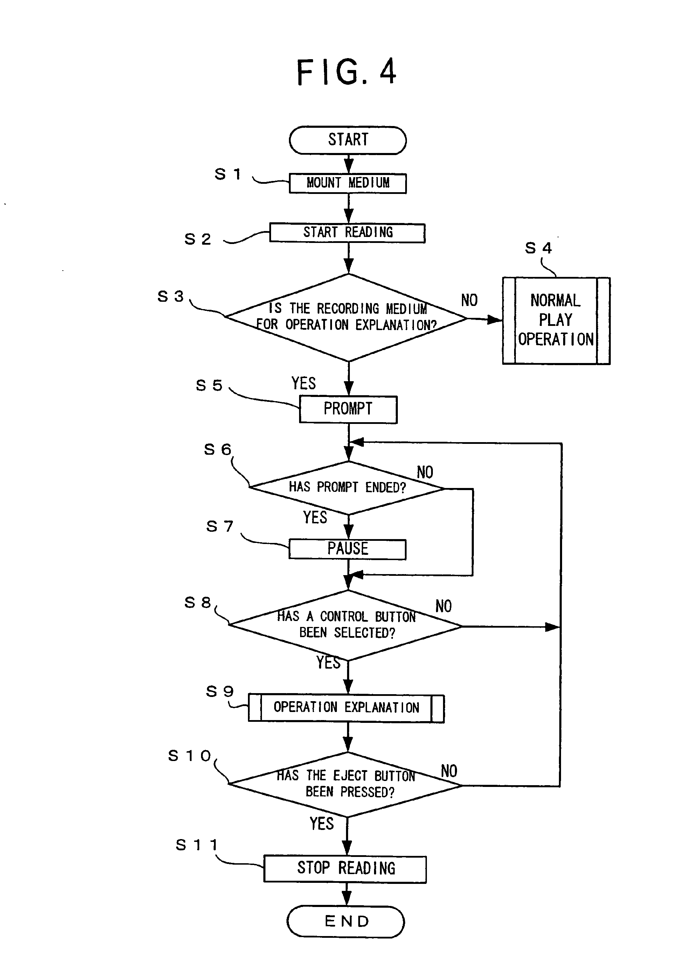

FIG. 4 is a flowchart showing the entire operation of this embodiment of the invention.

First, the recording medium DK is mounted in the mounting unit 102 (step S1).

Next, the recording medium DK starts to be read (step S2).

Also, the mounted recorded medium DK is determined as to whether or not it is a recording medium DK for explaining operations (step S3).

Here, in the case of a normal player such as a CD player, after the recording medium DK is mounted, the TOC (Table of Contents) data of the recording medium are automatically read. In the case of a player that uses other kinds of media, an operation for reading the specification area, where the disk-control data for controlling the disk are recorded, is performed. By recording data in the specification area of the recording medium DK that are capable of determining that the medium is a recording medium DK for explaining operation, it is possible to effectively determine that the medium is a recording medium for operation explanation without changing the operation of the normal player.

Also, in this example, the specification area is read automatically first after mounting, however it is also possible for some other area to be read automatically first in response to some operation. Furthermore, it is also possible to determine that the recording medium is a medium for operation explanation by some operation such as pressing a certain button. The processing of step S3 is executed based on control from the control unit 105 as a judgment device.

In the case of a recording medium that is not for operation explanation (step S3: N), the medium is determined to be a normal recording medium recorded with music or the like, and the normal play operation is performed (step S4).

In the case of a recoding medium that is for operation explanation (step S3: Y), the operation explanation process starts.

In this case, first, an audio message such as, 'The operation explanation has started. Press the control button for which an explanation is desired.' is output from the speaker to indicate to the user that the operation explanation has started, and prompts the user to select a control button 108 to be explained (step S5).

Here, the prompt message can be an image or video display that is displayed on the display unit 109 in the player, or on an external display unit.

Next, the process determines whether or not the prompt message has finished (step S6), and when the prompt message has finished (step S6: Y), operation pauses until the control button 108 is selected (step S7).

In the case that the user presses one of the control buttons 108 when the prompt message has not yet finished and the control-button selection of step S8 is performed, it is determined that the prompt message is not necessary and the process moves to the operation explanation (step S9) (step S6: N).

On the other hand, while the process is paused (step S7), it is determined whether or not a control button 108 is selected (step S8) and when a control button 108 has been selected (step S8: Y), the explanation data Ian that correspond to the selected control button 108 are detected from the recording medium DK and output from the speaker 106 or display unit 109 (step S9). The operation of step S9 will be explained later.

In the case when no control button 108 has been selected (step S8: N), the process returns to step S6, and after the prompt message ends (step S6: Y), processing pauses until a control button 108 is selected.

After that, it is determined whether or not the selected control button 108 is the eject button for removing the recording medium from the mounting unit 102 (step S10), and when it is not the eject button (step S10: N), the process returns to step S6 and the process is repeated, however, when it is the eject button (step S10: Y), reading of the recording medium DK stops (step S11). Here, step S11 is executed to make the control unit 105 functions as a stop device.

The recording medium DK is ejected using the eject button, and the operation explanation ends.

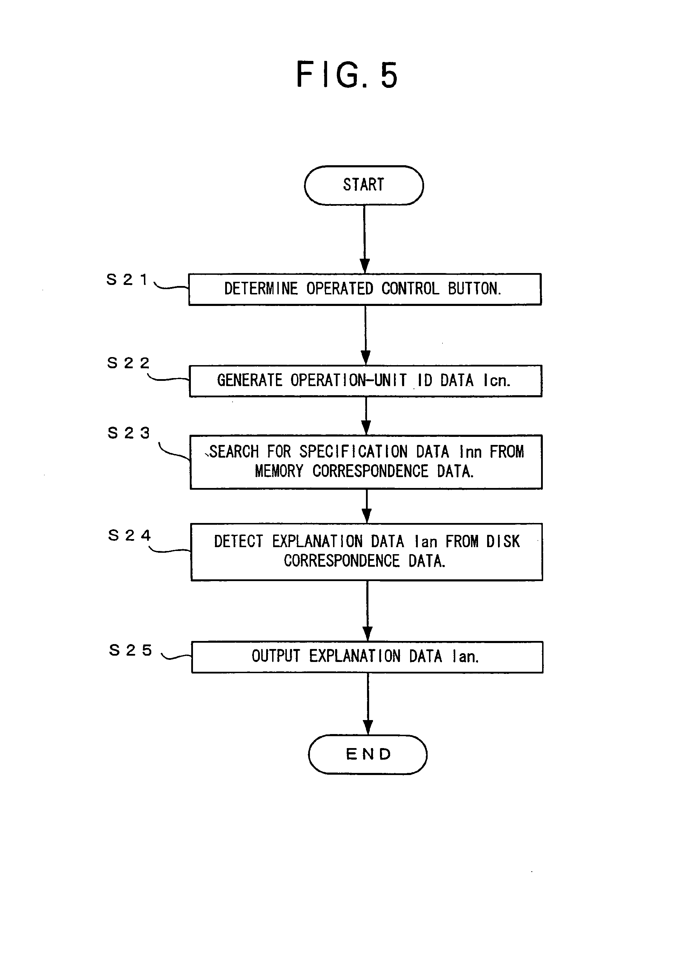

Next, the operation of step S9 will be described in detail based on the explanation-operation flowchart shown in FIG. 5.

First, when a control button 108 is selected, it is determined which of the control buttons 108 has been operated (step S21), and the generation unit 103 generates operation-unit ID data Icn that corresponds to that control button 108 (step S22).

Also, based on the memory-correspondence data that are stored in the memory 104, the control unit 10 searches for specification data Inn that corresponds to the generated operation-unit ID data Icn (step S23).

Explanation data Ian that correspond to the searched specification data Inn are detected from the disk-correspondence data on the recording medium DK (step S24), and output from the speaker 106 (step S25).

As explained above, in this embodiment of the invention, a control button 108 that needs to be explained is specified, and only the explanation data corresponding to the operation of the specified control button 108 is played and output from the recording medium DK, so it is possible to correlate and identify only an explanation corresponding to the control button 108 for which an explanation is desired to that control button 108, and to perform an explanation of the necessary control button 108 according to operation by the user.

Moreover, when the explanation data Ian use audio, the operation is explained by an audio explanation from the speaker 106, so the necessary explanation can be performed easily, and operation is simple even for the seeing impaired. Also, when the explanation data Ian use images or video, the operation is explained from the display unit 109 using images or video, so the necessary explanation can be performed easily, and operation is simple even for the hearing impaired.

The operation board 101 is not limited to being equipped in the player itself, but can be a remote controller, and the control buttons 108 can be the respective control buttons of the remote controller.

In the embodiment described above, when the mounted recording medium DK was determined to be a recording medium for operation explanation, the disk-control data in the specification area was used, however, it is also possible to identify that the recording medium is for operation explanation by performing certain operations after the recording medium for operation explanation has been mounted such as the user selecting a certain control button. In this case, the operation that the user desires to be explained is expressed, so after the recording medium DK is mounted (step S1), the process can move directly to the operation explanation of step S9.

The embodiment described above is constructed such that the operation explanation process ends when the eject button is operated as the end-operation unit. This is because when explanation data are assigned to all of the control buttons of the player, the operation for ending the operation explanation cannot be performed. Here, the end-operation unit for ending the operation explanation process is not limited to an eject button, and it is possible to use a button whose operation does not require an explanation or a control button that indicates directly to the user that it will end operation. For example, it is possible to use the ON/OFF button, or a Stop button that stops playing, etc. Furthermore, it is possible to have a special button for ending the operation explanation process. Also, it is possible to have the operation explanation process end when no buttons are operated after a specified amount of time after entering the operation explanation process. When ending the operation explanation process using these methods, it is possible to notify the user using sound or display that the operation explanation process is ending.

Moreover, the embodiment described above was explained for a player, however the invention can be applied to other apparatuses as well. For example, the invention can be applied to any apparatus that has a player that is capable of playing a recording medium such as a disk, cassette tape or memory medium, a speaker that outputs sound, and a display that displays images or video. That is, the invention can be applied to apparatuses such as a stereo apparatus equipped with a CD player, DVD player or memory medium player, or a television monitor or personal computer equipped with a DVD player.

Also, in the embodiment described above, the explanation data were conveyed to the user by sound or images, however, it is possible that when the explanation starts the sound volume will be '0' or at a very low level, or it is possible that the brightness of the display unit will be low making it difficult to view. In these cases, when it is determined that a recording medium for operation explanation has been mounted, it is possible to have the control unit perform control as a setting device such as automatically controlling the volume of the sound output when starting the operation explanation process to a preset level or greater, or to raise the brightness level of the display to a preset level so the display can be seen. With this kind of control, the user will more certainly be able to perform the operation explanation, and it simplifies the operations performed by the user.

The program corresponding to the flowcharts shown in FIG. 4 and FIG. 5, or the program corresponding to the changed form described above, can be stored in advance on a flexible disk, or can be stored on a flexible disk by way of a network such as the Internet, and the operation explanation process can be executed by having the control unit 105 read these stored programs.

## Claims

1. An operation explanation apparatus **characterized in that** said operation explanation apparatus comprising:
a mounting device (102) for mounting said recording medium (DK), containing pairs of explanation data (Ian) for explaining an operation of one or a plurality of operation units (108) and specification data (Inn) for specifying that explanation data (Ian) ;
a memory device (104) for storing correspondence data that indicates the correspondence between operation-unit ID data (Icn) for identifying said operation unit (108) and said specification data (Inn);
a generation device (103) for determining whether or not said operation unit (108) has been operated, and generating said operation-unit ID data (Icn) that indicates the operation unit (108) determined to have been operated;
a search device (105) for searching said specification data (Inn) corresponding to said generated operation-unit ID data (Icn) based on said stored correspondence data; and
an output device (106) for detecting and outputting from said recording medium said explanation data (Ian) corresponding to said searched specification data (Inn).

2. The operation explanation apparatus according to claim 1, **characterized in that** said explanation data are audio explanation data (Ian) that use audio to explain said operation, and
said output device (106) detects said audio explanation data (Ian) from said recording medium(DK) corresponding to said searched specification data, and outputs said audio explanation data.

3. The operation explanation apparatus according to claim 1, **characterized in that** said explanation data (Ian) are image explanation data that use images to explain said operation, and
said output device (106) detects said image explanation data from said recording medium (DK) corresponding to said searched specification data, and displays said image explanation data.

4. A recording medium (DK) **characterized in that** said recording medium (DK) comprising;
an explanation-data (Ian) recording area in which said explanation data (Ian) and a specification data (Inn) are recorded for at least the number of an operation units (108)
wherein, the recording medium (DK) is mounted in an operation explanation apparatus comprising:
a mounting device (102) for mounting said recording medium (DK), containing pairs of said explanation data (Ian) for explaining an operation of one or a plurality of operation units (108) and specification data (Inn) for specifying that explanation data (Ian);
a memory device (104) for storing correspondence data that indicates the correspondence between operation-unit ID data (Icn) for identifying said operation unit (108) and said specification data (Inn);
a generation device (103) for determining whether or not said operation unit (108) has been operated, and generating said operation-unit ID data (Icn) that indicates the operation unit (108) determined to have been operated;
a search device (105) for searching said specification data (Inn) that corresponding to said generated operation-unit ID data (Icn) based on said stored correspondence data; and
an output device (106) for detecting and outputting from said recording medium said explanation data (Ian) corresponding to said searched specification data (Inn).

5. The operation explanation apparatus according to claim 1, **characterized in that** a judgment device (105) for reading said specification area when said recording medium (DK) is mounted in said mounting device (102) and determining whether or not said recording medium (DK) is a recording medium (DK) recorded with said explanation data (Ian) and said specification data (Inn), wherein
said recording medium (DK) has a specification area for specifying that said explanation data (Ian) and said specification data (Inn) are recorded.

6. The operation explanation apparatus according to claim 1, **characterized in that** said operation explanation apparatus comprises end-operation unit that is operated when ending the operation explanation, and
a stop device for stopping output of the explanation data (Ian) that are being output when said end-operation device is operated.

7. The operation explanation apparatus according to claim 1, **characterized in that** said operation explanation apparatus further comprising:
a setting device for setting the output level of said output device (106) to a preset output level or greater when starting output of said explanation data (Ian).

8. An operation explanation method **characterized in that** said operation explanation method comprising:
a generation process (103) of determining whether not one or a plurality of operation units (108) has been operated, and generating operation-unit ID data (Icn) for identifying the operation-unit that was determined to have been operated;
a search process (105) of searching said specification (Inn) that correspond to said generated operation-unit ID data based on pre-stored correspondence data that indicate the correspondence between said operation-unit ID data (Icn) corresponding to each said operation unit (108), and specification data for specifying explanation data (Inn) for explaining the operation of said operation unit (108); and
an output process (106) of detecting and outputting said explanation data (Ian) corresponding to said specification data searched from a recording medium (DK) on which said explanation data (Ian) and said specification data for specifying the explanation data(Ian) are recorded for the number of said operation units (108).

9. The operation explanation method according to claims 7, **characterized in that** said explanation data (Ian) are audio explanation data that use audio to explain said operation, and
said output process (106) detects said audio explanation data corresponding to said searched specification data (Inn) from said recording medium (DK), and outputs said audio explanation data.

10. The operation explanation method according to claims 7, **characterized in that** said explanation data are image explanation data (Ian) that use images to explain said operation, and
said output process (106) detects said image explanation data corresponding to said searched specification data (Inn) from said recording medium (DK), and displays said image explanation data.

11. A data-recording medium **characterized in that** said data-recording medium readable by a computer and on which an operation explanation program that causes the computer comprising;
a generation device (103) for determining whether or not said operation unit (108) has been operated, and generating said operation-unit ID data (Icn) that indicates the operation unit (108) determined to have been operated;
a search device (105) for searching said specification data (Inn) that corresponding to said generated operation-unit ID data (Icn) based on pre-stored correspondence data that indicate the correspondence between said operation-unit ID data (Icn) corresponding to each said operation unit (108), and specification data for specifying explanation data (Ian) that explain the operation of said operation unit (108); and
an output device (106) for detecting and outputting said explanation data (Ian) corresponding to said searched specification data (Inn) from a recording device on which said explanation data (Ian) and said specification data (Inn) for specifying the explanation data (Ian) for are recorded for the number of said operation,
wherein, the recording medium (DK) is contained in an operation explanation apparatus that explains the operation of an operation unit (108) to be operated.

12. A data-recording medium according to claim 11 **characterized in that** said explanation data (Ian) are audio explanation data that use an audio explanation to explain said operation, and
said computer functions as said output device (106) and detects said audio explanation data corresponding to said searched specification data (Inn) from said recording medium (DK), and outputs said audio explanation data.

13. A data-recording medium according to claims 11 **characterized in that** said explanation data (Ian) are image explanation data that use images to explain said operation, and
said computer functions as said output device (106) and detects said image explanation data corresponding to said searched specification data (Inn) from said recording medium (DK), and displays said image explanation data.
